# EUROPÄISCHE PATENTANMELDUNG

(11) **EP 1 079 442 A1**
(43) Veröffentlichungstag der Anmeldung: **28.02.2001**
(21) Anmeldenummer: 99810772.6
(22) Anmeldetag: 26.08.1999
(51) Int. Cl.: H01L 31/042, E04D 13/18

(54) **Verfahren zur Befestigung eines Energieelementes und Gebäudehülle mit davon lösbarem Paneel**

(71) Anmelder: Schneider Leichtbausysteme, 9204 Andwil (CH); Flumroc AG, 8890 Flums (CH)
(72) Erfinder: Schneider, Walter, 9204 Andwil (CH); Köhl, Kurt, 8853 Lachen SZ (CH)
(74) Vertreter: Hasler, Erich, Dr.

(57) **Zusammenfassung**

Eine Dünnschicht-Fotovoltaikfolie wird auf einem Blech befestigt, welches eine mit der Folie kompatible Ausdehnungscharakteristik aufweist, aus Folie und Blech z.B. durch Umfälzen der Blechränder, ein Paneel (15) hergestellt und das Paneel (15) mittels parallel zu Paneel und Blechhaut (11) eines Gebäudes angeordneten Laschen (23) und Leistenelementen (25) verschieblich an der Blechhaut (11) befestigt, wobei das Paneel (15) an einer Stelle unverschieblich mit der Blechhaut (11) verbunden wird. Die Laschen (23) greifen bei montiertem Paneel (15) hinter das an den Hochsicken (19) eines Profilblechdaches befestigten Leistenelements (25)

## Beschreibung

Die Erfindung betrifft ein Verfahren zur Befestigung eines Energieelementes an einer Blechhaut eines Gebäudes, bei welcher das Energieelement in ein Paneel integriert wird, insbesondere das Befestigen einer bezüglich temperaturbedingter Ausdehnung mit einer bestimmten Metallgruppe kompatiblen Dünnschicht-Fotovoltaïkfolie auf einer Blechhaut eines Gebäudes aus einem ein anderes Temperaturverhalten aufweisenden Metall. Die Erfindung betrifft auch eine Gebäudehülle mit einer Blechhaut und einem von der Blechhaut lösbaren, Temperaturschwankungen ausgesetzten, flächigen Paneel, und ein Profilblechdach mit einem Steg und Bördel aufweisenden Stehfalz und einem solchen Paneel.

In Dünnschichttechnik hergestellte Fotovoltaïkfolien gibt es in einer Qualität, welche dazu ausgelegt ist, dass sie sich bei Erwärmung und Abkühlung parallel zu Fe-Metallen (Stahl, Edelstahl etc.) ausdehnt und zusammenzieht. Solche Folien werden auf Eisenbleche auflaminiert. Sie werden in Profilblechdächern eingesetzt und vor der Montage der Dachhaut direkt auf die Profilbleche der Dachhaut laminiert. Der Vorteil solcher Folien ist, dass sie sich praktisch unsichtbar in eine Dachfläche oder eine Fassadenfläche integrieren lassen. Aufgrund unterschiedlichen Ausdehnungsverhaltens ist die Folie aber nicht mit anderen Metallen kompatibel. Da in Europa jedoch Eisenblech gegenüber z.B. Aluminiumblech bei Gebäudehüllen eine untergeordnete Rolle spielt, ist die Folie in Europa kaum einsetzbar.

Es sind ferner Sonnenkollektoren und Fotovoltaïkelemente bekannt, welche nicht auf die Bleche aufgebracht werden. Diese Sonnenenergiepaneele, ob thermisch, fotovoltaïsch oder gemischt, werden als separate Elemente in die Gebäudehülle eingefügt und sind Teil der Gebäudebekleidung. Nachteilig an in die Dachfläche integrierten Paneelen ist, dass aufwändige Anpassungen der Dachhaut um die Paneele herum und/oder eine vorausschauende, präzise Planung der Anlage im Zusammenhang mit der Dacheindeckung erforderlich sind. Die Bahnenlänge solcher Paneele ist beschränkt, d.h. für längere Bahnen müssen solche Paneele aufwändig zusammengesetzt und an den Stössen überlappt werden, was nur bei relativ starker Dachneigung möglich ist. Zudem ist die Nachrüstungen von Dächern sehr aufwändig.

Energieelemente werden auch über der Dachhaut auf Ständern montiert. Die Ausrichtung des Paneels, welches die Energieelemente trägt, wird mit den Ständern möglichst nach der Sonnenbahn optimiert. In der Regel besteht ein solches Paneel aus einem möglichst grossflächigen, steifen Kasten mit einer Glasabdeckung und den entsprechenden fotovoltaïschen oder thermischen Elementen darin. Bei auf Gestellen montierten, nach der Sonne ausgerichteten Paneelen ist die Befestigung sehr kostspielig und die Anlage ist nicht frei gestaltbar und wirkt ästhetisch sehr bestimmend.

Es ist Aufgabe der Erfindung eine Befestigung von Energieelementen, insbesondere Dünnschichtfotovoltaïkfolien, vorzuschlagen, welche sich dazu eignet, solche Elemente auch nachträglich auf Gebäudehüllen anzubringen, und zwar unabhängig davon, aus was für einem Metall die Blechhaut der Gebäudehülle hergestellt ist. Die Energieelemente sollen sich unauffällig in die Gebäudehülle, insbesondere eine Profilblecheindeckung, integrieren lassen.

Eine Befestigung eines Energieelementes an einer Blechhaut eines Gebäudes, bei welcher das Energieelement in ein Paneel integriert wird, erfolgt erfindungsgemäss indem das Paneel etwa parallel zur Blechhaut angeordnet wird, an einer Stelle unverschiebbar mit dieser verbunden wird und an einer oder mehreren weiteren Stellen parallel zur Blechhaut verschieblich an der Blechhaut befestigt wird. Dabei wird unter Paneel ein Bauteil verstanden, welches eine solche Eigenstabilität aufweist, dass es als Ganzes montiert werden kann, indem es an mehreren über das Paneel verteilten Stellen befestigt wird.

Eine Befestigung einer bezüglich temperaturbedingter Ausdehnung mit einer bestimmten Metallgruppe kompatiblen Dünnschicht-Fotovoltaïkfolie auf einer Blechhaut eines Gebäudes aus einem ein anderes Temperaturverhalten aufweisenden Metall wird erfindungsgemäss dadurch erreicht, dass die Folie auf einem Blech aus einem Metall der bestimmten Metallgruppe befestigt wird, so dass Blech und Folie ein Paneel bilden, und dass dieses Paneel an einer Stelle mit der Blechhaut unverschiebbar verbunden wird und an einer oder mehreren weiteren Stellen parallel zur Fläche der Folie verschieblich auf der Blechhaut befestigt wird. Dadurch ist eine individuelles Ausdehnungsverhalten von Blechhaut und Paneel ermöglicht. Dies ermöglicht die Verwendung von verschiedenen Materialien für das Paneel und die Blechhaut.

Vorteilhaft wird ein Paneel gebildet, indem der Rand der Folie durch eine Umfälzung des Blechrandes am Blech fixiert wird. Die Umfälzung schützt den Rand der Folie. Der Rand kann sich in der Folge nicht vom Blech lösen. Vorteilhaft wird die Folie nicht auflaminiert, sondern in der Fläche lediglich mit wenigstens einem Streifen zweiseitig klebendem Klebeband befestigt. Eine solche Befestigung genügt, bei Sogbelastung die Folie gegen ein Abheben vom Blech zu schützen, ist aber wesentlich weniger aufwändig als das Laminieren.

Das Paneel wird an den Befestigungsstellen, an denen es parallel zur Blechhaut verschieblich befestigt sein soll, vorteilhaft mit Laschenelementen und mit mit den Laschenelementen zusammenwirkenden Leistenelementen verschieblich an der Blechhaut des Gebäudes befestigt. Die Lasche oder Laschen des Laschenelementes sind dazu einseitig mit dem Element oder dem Paneel verbunden, und greifen hinter das Leistenelement, d.h. auf die dem andern Bauteil zugewandte Seite des am anderen Bauteil befestigten Elements. Die Laschen und das am andern Bauteil befestige Element sind gegeneinander etwa parallel zur Fläche des Paneels verschiebbar, dank dem die Berührungsflächen beider Elemente etwa parallel zur Fläche der Gebäudehülle angeordnet sind. Selbst bei gewölbten Formen ist dadurch die Verschiebbarkeit gewährleistet.

Das Paneel wird an einer Stelle bezüglich der Längsausdehnung des Paneels gegenüber der Gebäudehülle fixiert, so dass diese Stelle gegenüber der Gebäudehülle nicht verschieblich ist. Dadurch verschiebt sich das Paneel lediglich um die Längenveränderung infolge Temperaturdifferenzen, bleibt aber eigentlich unbeweglich an Ort und Stelle.

Das Paneel wird vorteilhaft zwischen die Stehfälze eines Stehfalzdaches versetzt. Zwischen den Stehfälzen ist eine in der Breite begrenzte, in der Länge oft fast beliebig lange Fläche verfügbar. Daher sind die Abmessungen eines zwischen den Stehfälzen angeordneten Paneels im Wesentlichen nur in einer Richtung veränderlich. Für die Vorfabrikation von solchen Paneelen beschränkt sich dadurch ein Sortiment im Wesentlichen auf Paneele unterschiedlicher Länge. Zwischen den Stehfälzen eines Blechdaches ist das Paneel zudem sehr dezent und unauffällig angeordnet, da es sich der Struktur der Gebäudehülle unterordnet.

Vorteilhaft werden die Leistenelemente an Hochsicken eines Profilblechdaches und die Laschenelemente am Paneel befestigt. Die Leistenelemente sind dadurch als flache Blechstreifen ausbildbar und behindern oder gefährden auf dem Dach arbeitende Leute nicht. Die Laschenelemente hingegen sind an den Paneelen kaum störend, wogegen sie auf dem Dach als ein über die Dachfläche vorstehendes Teil die Möglichkeit des Stolperns erhöhen.

Alternativ zur Befestigung mit Laschen und Leistenelementen wird bei einem Profilblech-Stehfalzdach mit einem gegenüber dem Falz im Querschnitt breiteren Bördel ein entlang des Stehfalzes verschiebliches und den Bördel umfassendes Profil auf den Stehfalz gesetzt und das Paneel (15) an diesem Profil befestigt. Dies hat den Vorteil, dass die Dachhaut nicht verletzt zu werden braucht. Das den Bördel umfassende Profil kann durch Sogkräfte nicht von der Dachhaut gelöst werden, da der Bördel breiter ist als der Steg, und das Profil den Bördel umfasst, d.h. die Öffnung im Profil, durch welche sich der Steg erstreckt enger ist als die Breite des Bördels.

Dabei kann das Profil aus zwei symmetrischen Hälften zusammengesetzt werden, indem die beiden Hälften von beiden Seiten an den Bördel gelegt und über dem Bördel miteinander verbunden werden. Es kann das Profil aber auch längs auf den Stehfalz aufgeschoben oder unter Materialverformung des Profils quer zur Profillängsrichtung von oben über den Bördel gesteckt werden.

Bei einer Gebäudehülle mit einer Blechhaut, insbesondere ein Blechdach, mit einem von der Blechhaut lösbaren, Temperaturschwankungen ausgesetzten, flächigen Paneel, sind erfindungsgemäss am Bauteil Blechhaut mehrere erste Platten- oder Stabelemente in einem ersten Abstand zueinander befestigt. Am Bauteil Paneel sind in einem dem ersten Abstand entsprechendem Abstand mehrere zweite Platten- oder Stabelemente angeordnet. Dabei ist eines der am einen Bauteil angeordneten Elemente eine Lasche oder weist eine Lasche auf. Diese Lasche ist einseitig mit dem Element oder dem einen Bauteil verbunden, und greift hinter das Leistenelement, d.h. auf die dem andern Bauteil zugewandte Seite des Leistenelements. Die Lasche kommt daher zwischen das Leistenelement und das Bauteil zu liegen, an dem das Leistenelement befestigt ist. Die Lasche und das am andern Bauteil befestige Element sind gegeneinander etwa parallel zur Fläche der Blechhaut verschiebbar.

Aus genannten Gründen ist das an der Blechhaut befestige Element vorteilhaft ein Blechstreifen. Dieser Blechstreifen weist zweckmässigerweise Bereiche auf, in welchen er von der Blechhaut beabstandet ist. In diesen Bereichen ist die Lasche zwischen Element und Blechhaut angeordnet. Um diesen Abstand zu erhalten, ist der Blechstreifen vorteilhaft an Hochsicken einer Profilblechbahn befestigt.

Durch die Anordnung des Paneels zwischen den Stehfälzen einer Stehfalzdachbahn ist das Paneel in die Struktur der Gebäudehülle integriert. Vorteilhaft besteht das Paneel aus einem Fe-Blech mit deiner darauf angebrachten Dünnschicht-Fotovoltaïkfolie mit den Ausdehnungscharakterisitken von Eisen. Ein solches Paneel kann auch noch nachträglich auf einem Dach oder an einer Wand installiert werden. Dabei ist unerheblich, aus welchem Material die Blechhaut des Gebäudes ist. Für Folien mit Ausdehnungscharakterisitken anderer Metalle ist das entsprechende andere Metall anstelle des Eisen zu nehmen.

Vorteilhaft ist die Folie an ihren Rändern in einem Blechfalz des Trägerbleches festgehalten. Das Trägerblech, auf dem die Folie angeordnet ist, übersteht dazu den Rand der Folie, wobei dieser überstehende Rand über die Folie zurück umgefaltet ist. Ein solches Paneel hat genügend Steifigkeit, dass es auch bei grossen Wind- oder Schneelasten fest mit dem Dach verbunden bleibt, und kann dennoch ohne besondere Anpassung auch auf gewölbte Dächer montiert werden.

Vorteilhaft ist die Folie aufgeklebt. Wenn der Rand der Folie durch den Blechfalz gehalten ist, besteht keine Gefahr, dass die Folie sich vom Blech löst, auch wenn die Folie nicht auflaminiert ist. Auch eine vollflächige Verklebung ist nicht notwendig, es genügt viel mehr, die Fläche der Folie an etlichen Stellen, z.B. in Streifen, vor einem Abheben der Folie durch Windsog zu schützen.

Nachfolgend wird die Erfindung anhand der in den Figuren dargestellten Beispiele näher erläutert. Es zeigt dabei
- Figur 1:: eine perspektivische Skizze eines Laschenelements, befestigt an Hochsicken eines Profilblechdaches,
- Figur 2:: eine perspektivische Skizze eines Paneels mit einem Plattenelement,
- Figur 3:: eine perspektivische Skizze eines Profilblechdaches mit einem Plattenelement,
- Figur 4:: eine perspektivische Skizze eines Paneels mit einem Laschenelement,
- Figur 5:: eine perspektivische Skizze eines Stabelements, befestigt an Hochsicken eines Profilblechdaches,
- Figur 6:: Laschenelemente, welche mit einem Band an einem Paneel befestigt sind,
- Figur 7:: Laschenelemente, welche Teil des Paneels sind,
- Figur 8:: ein Solarpaneel mit einer fotovoltaïschen Dünnschichtfolie,
- Figur 9:: einen Schnitt quer zur Gefällsrichtung eines Daches durch die Befestigung eines Paneels auf unterschiedlichen Seiten eines Plattenelementes abstützenden Laschen,
- Figur 10:: einen Schnitt in Gefällsrichtung durch die Befestigung gem. Fig. 9,
- Figur 11:: ein fotovoltaïsches Element gem. Figur 8 mit einer Doppelabstützlasche,
- Figur 12:: einen Schnitt durch eine Befestigungsstelle mit U-förmigem Laschen- und Leistenelement,
- Figur 13:: eine perspektivische Skizze eines Stehfalzes eines Profilblechdaches mit einem darauf monierten Halter aus zwei zusammengesetzten Halbprofilen,
- Figur 14:: eine perspektivische Skizze eines einstückigen Halters aus Blech,
- Figur 15:: eine perspektivische Skizze eines Halters aus einem strangepressten Profil.

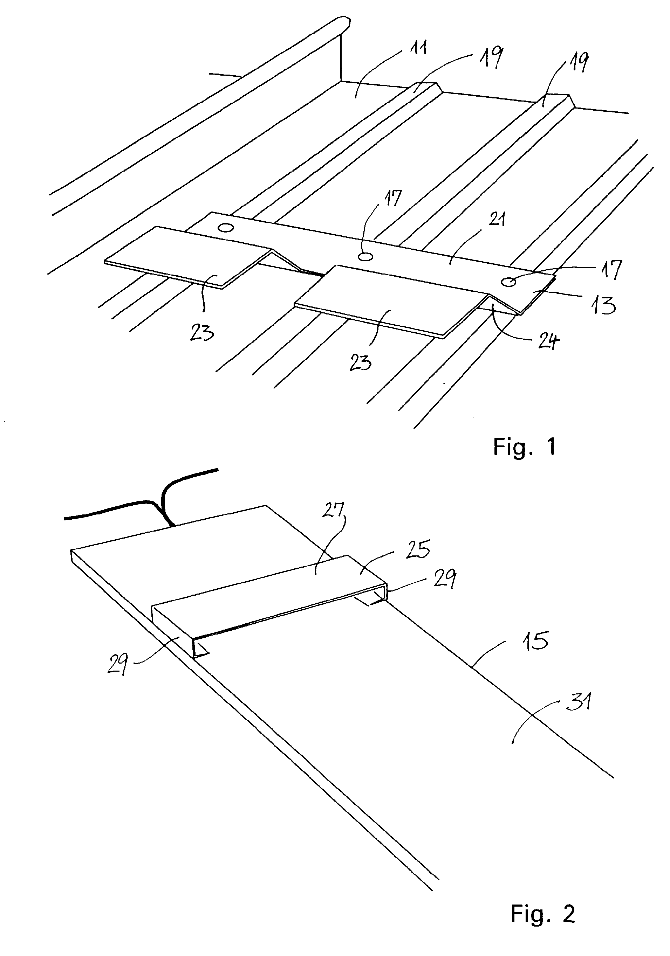

Figur 1 zeigt eine perspektivische Aufsicht auf ein Profilblechdach 11 mit einem Befestigungselement 13 für ein Paneel 15. Die Figur 2 ein an der Dachhaut 11 befestigbares Paneel 15. Die Erfindung beschränkt sich aber nicht auf Dächer, sondern ist auch auf Blechfassaden anzuwenden. Ausgangsproblem ist das Ausdehnungsverhalten von Blechbauteilen, welches in der Regel mit dem Ausdehnungsverhalten von daran befestigten Paneelen unverträglich ist. Durch unterschiedliche Ausdehnungskoeffizienten unterschiedlicher Materialien und die unterschiedliche Erwärmung unter Sonneneinwirkung oder durch den Betrieb müssen sich Sonnenkollektoren, Fotovoltaïkpaneele, Wärmetauscher etc. unabhängig von der Gebäudehaut 11 ausdehnen und zusammenziehen können.

Dazu ist auf der Dachhaut 11, wie in Figur 1 dargestellt, ein Laschenelement 13 befestigt. Die Befestigung erfolgt mit Nieten 17, vorteilhaft an Hochsicken 19 der Blechhaut 11. Anfallendes Regenwasser fliesst dadurch unter dem Element 13 hindurch. Die Befestigungsstellen müssen lediglich einem geringen Wasserdruck standhalten. Sind keine Hochsicken 19 vorhanden, können Distanzhalter vorgesehen sein oder das Laschenelement 13 liegt flächig auf der Blechhaut 11 an. Dichtungsmittel für solche Nietstellen 17 sind bekannt. Zur Befestigung eines Paneels sind mehrere solche Laschenelemente in jeweils einem bestimmten Abstand zueinander vorgesehen.

Das Laschenelement 13 ist aus einem Blech geformt und besitzt einen Steg 21, welcher an der Dachhaut befestigt ist, und vom Steg 21 wegstehende Laschen 23. Die Laschen 23 sind mit Abstand zur Dachhaut 11 und zur Ebene des Steges 21 angeordnet. Der Abstand wird durch einen doppelt abgebogenen Zwischenstreifen 24 zwischen Lasche 23 und Steg 21 erreicht. In diese Laschen 23 ist nun das auf der Rückseite 31 des Paneels 15 befestigte Leistenelement 25 einsteckbar. Das Leistenelement 25 ist ein C-förmig gebogener Blechstreifen, welcher am Paneel 15 befestigt, z.B. angeschweisst ist. Das Leistenelement 25 besitzt einen Blechstreifenteil, oder eben eine Leiste 27, welche Leiste durch zwei Distanzteile 29 in Abstand zum Paneel 15 gehalten ist. Die Distanzteile 29 sind durch winkliges Abbiegen des Blechstreifens erreicht worden. Zwischen dem Paneel 15 und der Leiste 27 ist eine Distanz, welche erlaubt die Laschen 23 mit einem kleinen Spielraum einzuschieben. Es sind, entsprechend den Laschenelementen, auch eine Mehrzahl von Leistenelementen vorgesehen.

Wird nun das Fotovoltaïkpaneel 15 aus Figur 2 auf dem Dach 11 aus Figur 1 installiert, so wird das Paneel 15 mit seine Rückseite 31 auf die Laschen 23 gelegt und die Laschen durch Verschieben des Paneels 15 zwischen Leiste 27 und Paneel 15 geschoben. Dies verhindert, dass das Paneel von der Dachhaut abgehoben werden kann. Danach wird das Paneel 15 an einem Punkt mit der Dachhaut 11 verbunden, z.B. durch ein Verschrauben einer Leiste 27 mit einer Lasche 23. Wenn die Dachhaut sich ausdehnt oder zusammenzieht werden entsprechend die Abstände zwischen den an der Dachhaut 11 befestigten Laschenelementen 13 grösser bzw. kleiner. Dabei verändern sich die Abstände zwischen den am Paneel 15 befestigten Leistenelementen 25, abhängig von der Temperaturdifferenz und den Materialeigenschaften des Paneels 15, in einem anderen Mass. Die Differenz der Längenveränderungen wird nun zwischen Laschen und Leisten ausgeglichen. D.h. die Laschen 23 gleiten zwischen Leiste 27 und Paneelrückwand 31, und zwar um umso grössere Beträge, je grösser der Abstand des Befestigungspunktes zwischen Paneel 15 und Dachhaut 11 von der entsprechenden Leisten- 25 bzw. Laschenelement 13 entfernt ist.

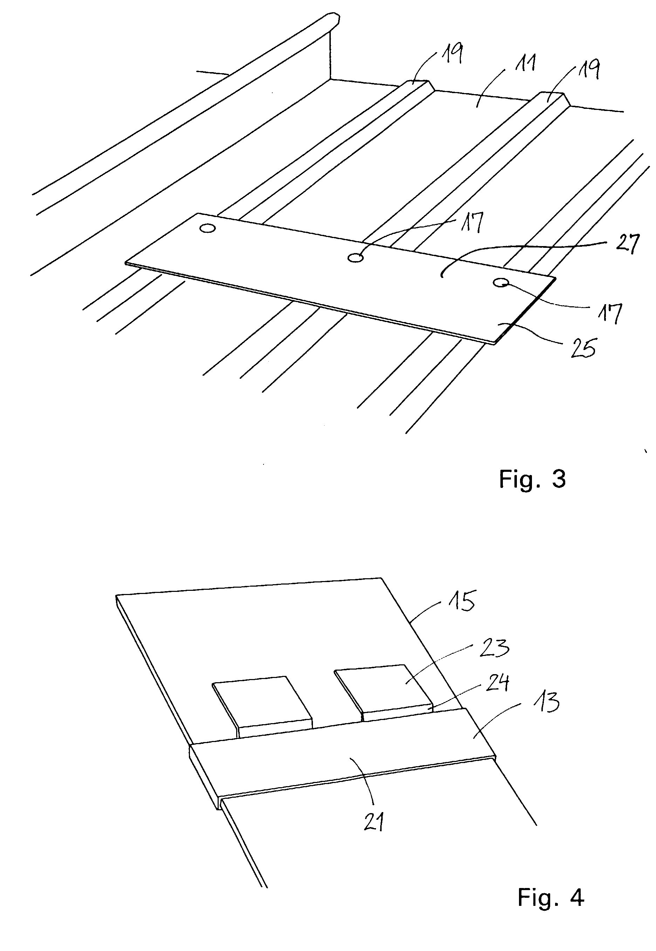

Die umgekehrte Anordnung von Leistenelement 25 und Laschenelement 13 bezüglich Dachhaut 11 und Paneel 15 ist in Figur 3 und 4 gezeigt. Das Leistenelement 25 ist auf der Dachhaut 11 mit Nieten 17 befestigt. Die Nieten gehen durch den das Leistenelement bildenden Blechstreifen und die Hochsicken 19 der Profilblecheindeckung 11. Wo keine Hochsicken 19 vorhanden sind, z.B. in einem Fassadenelement, kann das Leistenelement durch entsprechendes Biegen des das Leistenelement bildenden Blechstreifens in Abstand zur Blechhaut 11 angeordnet werden.

Das Paneel 15 in Figur 4 ist mit einem Laschenelement 13 ausgerüstet. Der das Laschenelement 13 bildende Blechstreifen ist derart zugeschnitten, dass ein Steg 21 mit entlang des Steges 21 angeordneten Laschen 23 vorliegt. Die Laschen 23 sind rechteckige Blechflächen, welche an einer Rechteckseite mit dem Steg 21 verbunden sind. Als Verbindung dient eine Zwischenstück 24, welches so breit ist, wie die mit dem Steg 21 verbundene Rechteckseite der Lasche 23. Zwischen Lasche 23 und Zwischenstück 24 sowie zwischen Zwischenstück 24 und Steg 21 ist eine Biegekante, so dass die Lasche parallel und mit Abstand zum Steg angeordnet ist.

Soll nun das Paneel 15 aus Figur 4 auf die Dachfläche 11 gem. Figur 3 gesetzt werden, so wird das Paneel 15 auf die Leistenelemente 25 gelegt. Die Laschen müssen zwischen den Hochsicken 19 angeordnet sein. Das Paneel 15 kann nun derart verschoben werden, dass die Laschen 23 hinter die Leistenelemente 25, zwischen das Leistenelement 25 und die Dachhaut zu liegen kommen. Es sind mehrere Leistenelemente und entsprechend viele Laschenelemente 13 vorgesehen.

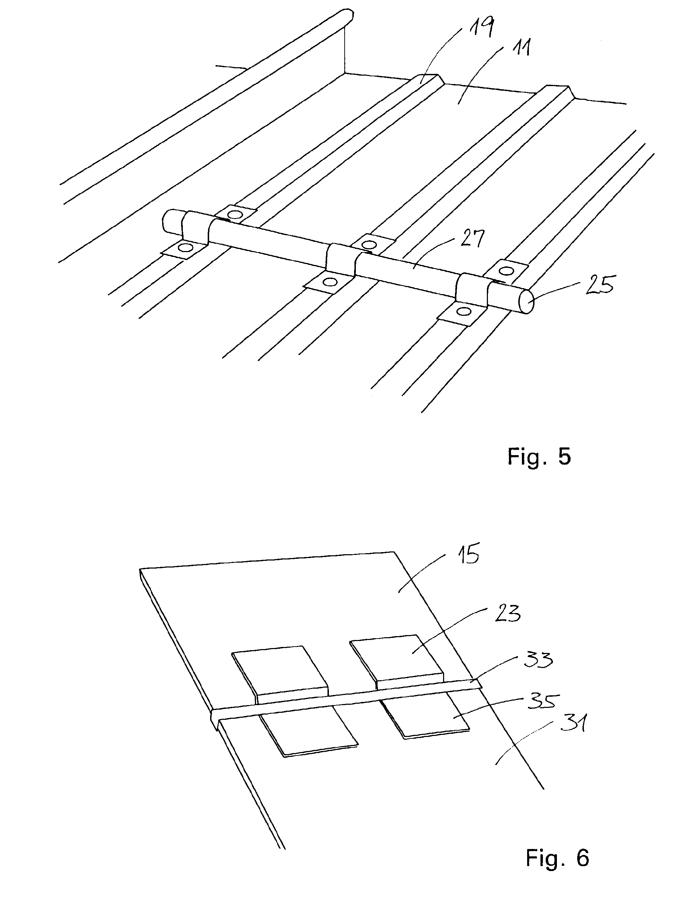

Die Leistenelemente 25 sind vorteilhaft Blechstreifen, wie in Figur 2 dargestellt, oder noch einfacher wie in Figur 3 gezeigt. Sie können jedoch auch andere Querschnitte aufweisen In Figur 5 ist beispielsweise ein Rundstab als Leistenelement 25 dargestellt. Vierkanthohlprofile, Winkelprofile und dergleichen sind aber auch möglich. Die Laschen müssen nicht aus einem Blechstreifen geschnitten sein, wie in Figur 1 oder 4. Sie können auch Abschnitte eines Z-Profiles oder h-Profiles sein. In Figur 6 sind zwei Laschen 23 mit einem Band 33 auf die Rückseite 31 eines Paneels 15 gebunden. Die Laschen 23 sind jeweils die eine Fläche eines Abschnittes eines Z-Profiles und mit Abstand zueinander abgeordnet. Die andere, mit Abstand und parallel zur Laschenfläche 23 angeordneter Fläche 35 des Profilabschnittes liegt an der Rückseite 31 des Paneels 15 an.

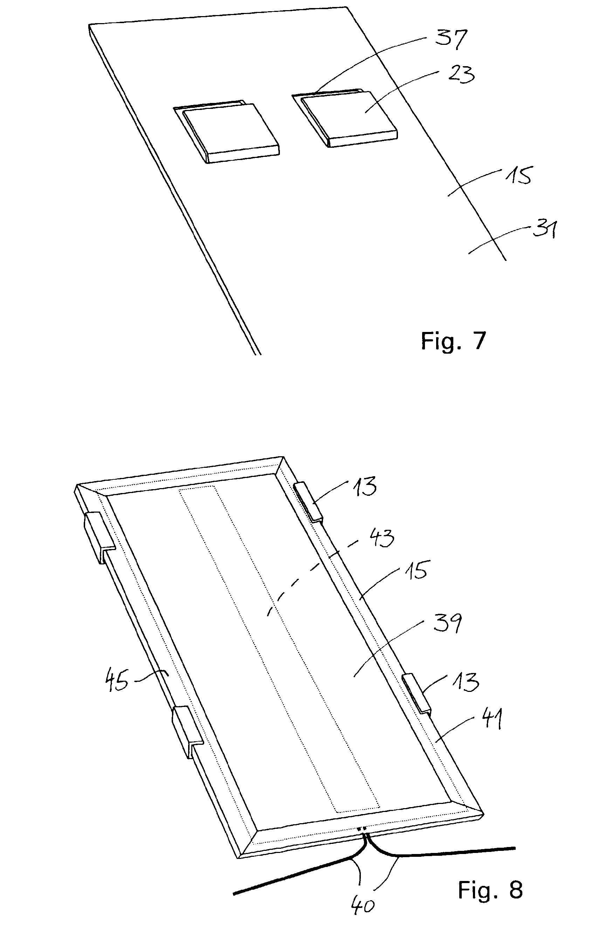

Die Laschen können aber auch aus der Rückwand 31 des Paneels 15 herausgearbeitet sein. In Figur 7 sind zwei Laschen 23 gezeigt, welche aus der Rückwand 31 des Paneels 15, bzw. aus dem Trägerblech für den wirksamen Teil des Paneels geschnitten und gebogen wurden. Im Bereich der Laschen 23 ist daher die Rückwand 31 offen. Sie weist dort eine Öffnung 37 auf, durch welche die Rückseite des wirksamen Teils des Paneels, z.B. die Rückseite einer Dünnschicht-Fotovoltaïkfolie, sichtbar ist.

Grundsätzlich kann das Paneel 15 jegliche denkbare Funktion haben. Es sind Beschriftungstafeln, Farbtafeln, Wärmetauscherelemente für Kühlanlagen oder zur Energiegewinnung, Fotovoltaïkpaneele, kombinierte Paneele für Fotovoltaïk und Wärmegewinnung und dergleichen mehr vorstellbar. Besonders bevorzugt wird aber ein Paneel 15, wie es in Figur 8 dargestellt ist. Das in Figur 8 schematisch dargestellte Fotovoltaïkpaneel 15 besteht aus einem Stahlblechrücken und darauf befestigtem Dünnschichtkollektor 39. Die in Dünnschichttechnik hergestellte fotovoltaïsche Folie 39 ist über Anschlusskabel 40 zusammenschaltbar und an eine Energieversorgung anschliessbar. Sie ist in den Vereinigten Staaten mit der Absicht entwickelt worden, die Schicht direkt auf die Stahlblechprofile 11 für eine Dacheindeckung zu laminieren. Die Folie 39 besitzt eine Schicht, welche sich innerhalb bestimmter Grenzen temperaturabhängig ausdehnen und zusammenziehen können muss. Die Folie 39 darf daher nur auf Fe-Bleche laminiert werden. Andere Bleche, z.B. die in Europa im Fassadenbau und für Bedachungen oft verwendeten Aluminiumbleche, oder auch Kupfer- oder Zinkbleche dürfen nicht als Laminiergrund für eine solche Folie 39 dienen.

Die Folie 39 ist daher auf einem Edelstahlblech oder einem beschichteten Stahlblech 41 befestigt. Das Stahlblech dehnt sich synchron mit der Folie 39 aus. Stahlblech 41 und Folie 39 bilden zusammen ein Paneel 15, welches sich wie beschrieben auf jeder Dachhaut befestigen lässt, und welches Paneel auch unabhängig von der Befestigungsart des Paneels an einer Gebäudehülle wesentliche Vereinfachungen ermöglicht. Wenn auch die Folie laminiert sein könnte, so ist im dargestellten Beispiel die Folie 39 nur in ihrem mittleren Bereich mit zweiseitigem Klebeband 43 am Blechrücken befestigt. Das Blech 41 ist grösser zugeschnitten als die Folie und die Blechränder 45 sind auf die Vorderseite der Folie 39 gebogen. Dadurch ist die Folie umlaufend durch die Blechränder 45 gehalten und kann sich nicht vom Blech 41 lösen. Laschenelemente 13 sind um die Paneelränder gepresst und so am Paneel befestigt. Mit den Laschenelementen kann das Paneel 15 in Leistenelemente 25 auf einer Dachbahn eingehängt werden. Dank der Verschiebbarkeit zwischen Paneel und Profilblecheindeckung kann das Paneel aus einem anderen Metall gefertigt sein, als das Profilblech der Dacheindeckung.

Ein Paneel 15 kann mit seiner Rückwand 31 auf dem an der Gebäudehülle befestigten Laschen- oder Leistenelement aufliegen. In gewissen Fällen ist jedoch ein bestimmter Abstand zwischen Gebäudehülle 11 und Paneel 15 erwünscht. Dies kann erreicht werden, indem die Laschenelemente 13 an der Gebäudehülle befestigt werden und ein entsprechend grosses Zwischenstück 24 aufweisen. Auf einer Dachfläche ist aber vorteilhaft das Leistenelement an der Dachhaut 11 befestigt, damit die auf dem Dach arbeitenden Leute nicht über die Laschen 23 stolpern.

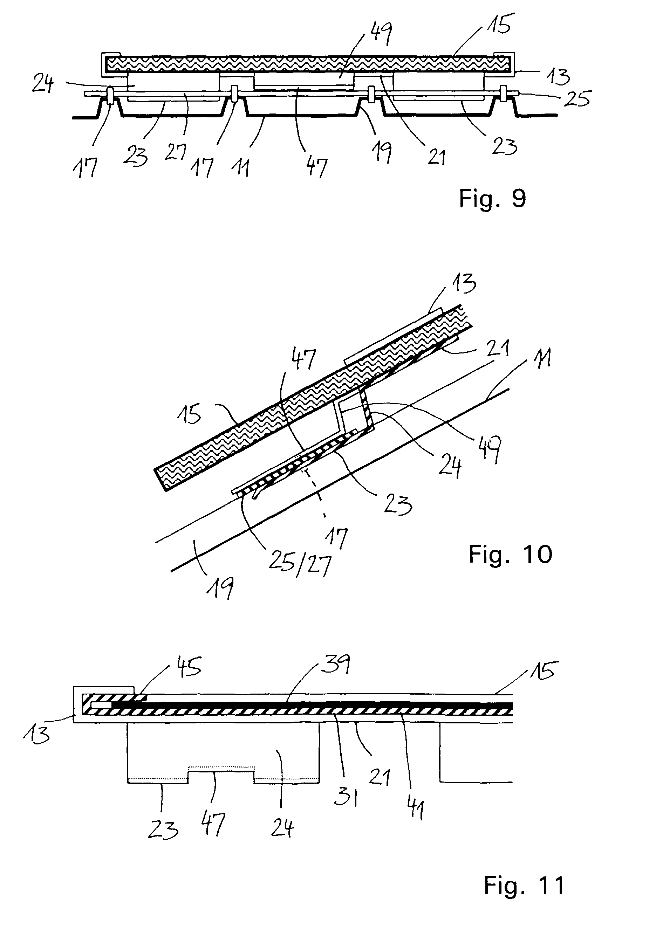

Um in diesem Fall den gewünschten Abstand zu erreichen, sind, wie in den Figuren 9 bis 11 dargestellt, am Paneel erste Laschen 23 befestigt, welche zwischen Dachhaut 11 und Leistenelement 25 liegen, und zweite Laschen 47, welche zwischen Leistenelement 25 und Paneel 15 angeordnet sind. Beide Laschen 23,47 sind im wesentlichen parallel zur Ebene der Leistenelemente 25 bzw. der Dachhaut 11 angeordnet. Der Unterschied der Länge der Zwischenstücke 24 der ersten Laschen 23 und der Zwischenstücke 49 der zweiten Laschen 47 entspricht etwa der Dicke des Leistenelementes 25 (plus Laschendicke).

Das in Figur 10 dargestellt Paneel 15 ist von oben auf die Leistenelemente 25 aufgeschoben. Dadurch kann das Paneel 15 nicht abrutschen. Da jedoch die Paneele ohnehin an einem Punkt befestigt werden und von dort aus sich ausdehnen können müssen, dürfen die Zwischenstücke 24 die Leistenelemente 25 nicht berühren. Daher können die Paneele 15 auch von unten auf die Leistenelemente 25 aufgeschoben werden. Sind die Laschenelemente 13 an der Dachhaut befestigt, so können entsprechend die Laschen in Bezug auf die Gefällsrichtung des Daches nach unten oder nach oben gerichtet sein.

Die ersten und die zweiten Laschen 23 bzw. 47 können an getrennten Zwischenstücken 24 bzw. 49 angeordnet sein. In Figur 11 sind sie am selben Zwischenstück 24, jedoch in unterschiedlichem Abstand zur Paneelrückwand 31 angeordnet. Das Laschenelement 13 mit ersten und zweiten Laschen kann aber auch analog zum Laschenelement 13 in Figur 6 aus einem Profilstab hergestellt sein.

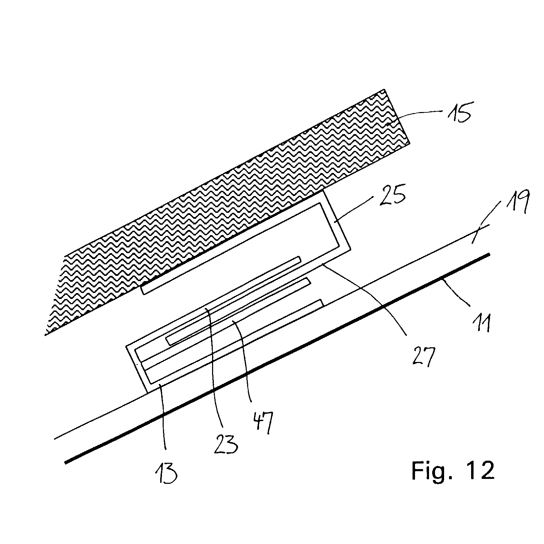

In Figur 12 ist gezeigt, dass die Laschenelemente 13 und die Leistenelemente 25 auch U-förmig sein können. Die Leiste 27 ist der eine Arm eines U-Profils, während der andere Arm des Profils am Paneel befestigt ist. Dabei ist das Laschenelement 13 z.B. in regelmässigen Abständen eingeschnitten, so dass benachbarte Laschen 23,47 in unterschiedlichem Abstand zur Auflagefläche, bzw. dem Steg 21, umgebogen sein können. Zwischen den Laschen 23,47 kann auch ein Zwischenraum sein, welcher erlaubt, das Laschenelement 13 mit der Dacheindeckung 11 zu vernieten.

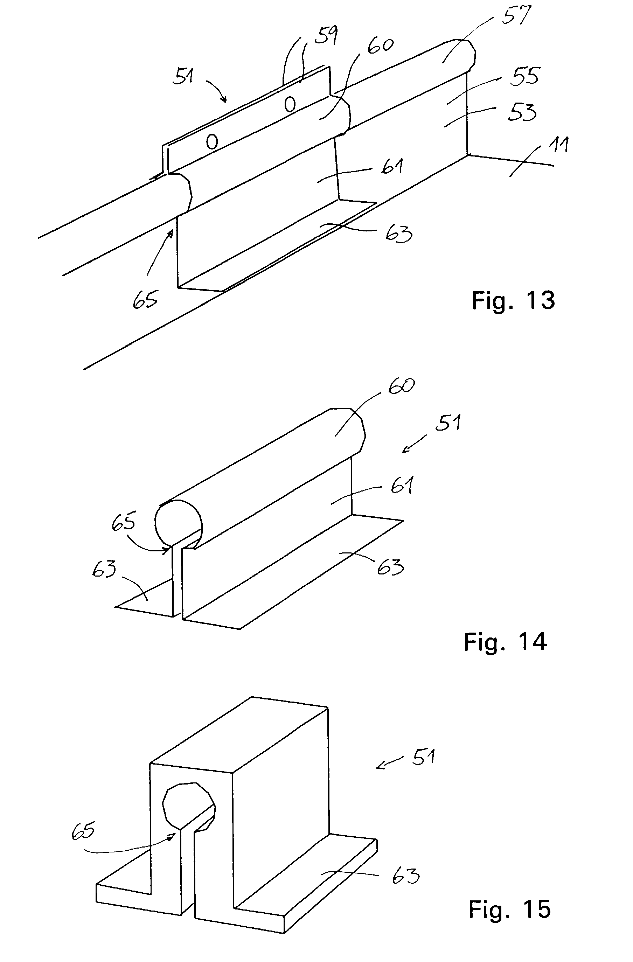

Die Figuren 13 bis 15 zeigen Halter 51 in verschiedenen Ausführungen, welche auf den Stehfalz 53 eines Stehfalzdaches 11 aufgesetzt werden können, und an denen danach ein Paneel 15 befestigbar ist. Die Halter 51 sind grundsätzlich T-förmig, wobei von der Querbalkenseite des T her ein Einschnitt in den Stamm ausgebildet ist, welcher Einschnitt zur Aufnahme des Stehfalzes eines Stehfalzdaches bestimmt ist. Entsprechend der Form des Stehfalzes 53 mit Steg 55 und im Querschnitt breiterem Bördel 57, ist der Einschnitt an seinem Grund breiter als im übrigen Bereich ausgebildet. In Figur 13 besteht der Halter aus zwei symmetrischen Teilen, welche parallel zum Bördel 57 eines Stehfalzes 53 geformt sind und je den Bördel 55 zur Hälfte umfassen. Jede Hälfte besitzt eine Rippe 59, welche parallel zur Stehfalzrichtung angeordnet ist, und an denen die beiden Hälften miteinander verbunden werden können, indem die Rippen 59 aneinander gelegt und mit Schrauben oder Nieten verbunden werden. Der Halter 51 ist aus Blech geformt und weist eine Flanke 61 auf, welche mit dem den Bördel umfassenden Teil 60 verbunden ist. Die Flanke 61 verläuft parallel zum Steg 55 des Stehfalzes 53. An der Flanke 61 ist senkrecht dazu abstehend ein Flansch 63 ausgebildet, an dem ein Paneel 15 befestigbar ist. Der Flansch 63 kann in einem beliebigen Abstand zur Dachfläche ausgebildet sein. Dadurch kann ein Paneel 15 auch mit einem grossen Abstand zur Dachfläche über der Dachhaut 11 befestigt werden, so dass die Stehfälze 53 kaum Schatten auf das Paneel 15 werfen.

Der Halter gem. Figur 13 wird am Stehfalz 53 befestigt, indem die beiden Hälften von beiden Seiten an den Bördel 57 angelegt werden. Dabei werden die beiden Rippen 59 zueinander ausgerichtet und z.B. miteinander vernietet. Dadurch ist der Halter am Stehfalz befestigt und kann nur noch längs des Stehfalzes verschoben werden.

Beim Halter 51 gemäss Figur 14 sind die beiden Hälften des Halters gem. Figur 13 zu einem Stück zusammengefasst. Als Konsequenz davon ist der Halter 51 gemäss Figur 14 lediglich unter Verformung des Materials über den Bördel 57 stülpbar, oder vom Ende des Stehfalzes 53 her auf den Bördel 57 aufschiebbar. In gleicher Weise aber ist das Paneel 15 am Flansch 63 befestigbar und verunmöglicht das Abheben des Halters 51 über den Bördel hinweg.

Der in Figur 15 dargestellte Halter ist von einem stranggepressten Profil abgeschnitten. Seine äusseren Konturen sind kantig und folgen nicht dem Verlauf des Einschnittes für den Stehfalz. Solche Halter 51 sind z.B. aus Aluminium oder Kunststoff herstellbar. Alle diese Halter können als kurze Profilstücke auf den Stehfalz gesetzt werden, oder sich über die gesamte Länge des Paneels erstrecken. Sie können durch ein sich über die gesamte Länge des Paneels erstreckendes Blech abgedeckt werden. Die Halter sitzen verschieblich auf dem Stehfalz, lasten das Gewicht des Paneels auf diesen ab und verhindern ein Abheben des Paneels von der Dachfläche, indem sie auf der Dachseite des Bördels 57 eine Verengung 65 aufweisen. Durch ihre Verschiebbarkeit ist ein unterschiedliches Ausdehnungsverhalten von Dachhaut 11 und Paneel 15 gewährleistet.

## Patentansprüche

1. Verfahren zur Befestigung eines Energieelementes (39) an einer Blechhaut (11) eines Gebäudes, bei welchem das Energieelement (39) in ein Paneel (15) integriert wird, dadurch gekennzeichnet, dass das Paneel (15) parallel zur Blechhaut (11) angeordnet wird, an einer Stelle unverschiebbar mit dieser verbunden und an einer oder mehreren weiteren Stellen parallel zur Blechhaut (11) verschieblich an der Blechhaut befestigt wird.

2. Verfahren zur Befestigung einer bezüglich temperaturbedingter Ausdehnung mit einer bestimmten Metallgruppe kompatiblen Dünnschicht-Fotovoltaïkfolie (39) auf einer Blechhaut (11) eines Gebäudes aus einem ein anderes Temperaturverhalten aufweisenden Metall, dadurch gekennzeichnet, dass die Folie (39) auf einem Trägerblech (41) aus einem Metall der bestimmten Metallgruppe befestigt wird, so dass Trägerblech (41) und Folie (39) zusammen ein Paneel (15) bilden, und dass dieses Paneel an einer Stelle mit der Blechhaut (11) unverschiebbar verbunden wird und an einer oder mehreren weiteren Stellen parallel zur Fläche der Blechhaut und gegenüber der Blechhaut verschieblich an dieser befestigt wird.

3. Verfahren nach Anspruch 2, dadurch gekennzeichnet, dass der Rand der Folie (39) durch eine Umfälzung des Blechrandes (45) am Blech (41) fixiert wird.

4. Verfahren nach Anspruch 2 oder 3, dadurch gekennzeichnet, dass die Folie (39) in der Fläche mit wenigstens einem Streifen zweiseitig klebendem Klebeband (43) befestigt wird.

5. Verfahren nach einem der Ansprüche 1 bis 4, dadurch gekennzeichnet, dass das Paneel (15) mit Laschenelementen (13) und mit mit den Laschenelementen (13) zusammenwirkenden Leistenelementen (25) verschieblich an der Blechhaut (11) des Gebäudes befestigt wird.

6. Verfahren nach einem der Ansprüche 1 bis 5, dadurch gekennzeichnet, dass das Paneel (15) zwischen die Stehfälze eines Stehfalzdaches (11) versetzt wird, dass die Leistenelemente (25) an Hochsicken eines Profilblechdaches und die Laschenelemente (13) am Paneel (15) befestigt sind.

7. Verfahren zur Befestigung eines Paneels auf einem Profilblech-Stehfalzdach mit einem gegenüber dem Falz im Querschnitt breiteren Bördel, nach einem der Ansprüche 1 bis 4, dadurch gekennzeichnet, dass ein entlang des Stehfalzes verschiebliches und den Bördel umfassendes Profil auf den Stehfalz gesetzt wird, und dass das Paneel (15) an diesem Profil befestigt wird.

8. Verfahren nach Anspruch 7, dadurch gekennzeichnet, dass das Profil aus zwei symmetrischen Hälften zusammengesetzt wird, wobei die beiden Hälften von beiden Seiten an den Bördel gelegt und über dem Bördel miteinander verbunden werden.

9. Verfahren nach Anspruch 7, dadurch gekennzeichnet, dass das Profil längs auf den Stehfalz aufgeschoben wird.

10. Verfahren nach Anspruch 7, dadurch gekennzeichnet, dass das Profil unter Materialverformung quer zur Profillängsrichtung über den Bördel gesteckt wird.

11. Gebäudehülle mit einem Bauteil Blechhaut (11), insbesondere ein Blechdach, mit einem vom Bauteil Blechhaut (11) lösbaren, Temperaturschwankungen ausgesetzten, flächigen Bauteil Paneel (15),
dadurch gekennzeichnet,
- dass am einen Bauteil mehrere Leistenelemente (13,25) in einem ersten Abstand zueinander befestigt sind,
- dass am andern Bauteil in einem dem ersten Abstand entsprechendem Abstand mehrere Laschen (23) angeordnet sind,
- dass diese Lasche (23) zwischen die dem einen Bauteil zugewandte Seite des Leistenelements (25) und das eine Bauteil greift,
- dass die Lasche (23) und das Leistenelement (25) gegeneinander etwa parallel zur Fläche des Paneels (15) oder der Blechhaut (11) verschiebbar sind, und
- dass das Paneel (15) und die Blechhaut (11) an einer Stelle miteinander unverschiebbar verbunden sind.

12. Gebäudehülle mit Paneel (15) nach Anspruch 11, dadurch gekennzeichnet, dass das an der Blechhaut (11) befestige Element (25) ein Leistenelement, insbesondere ein Blechstreifen ist, dass dieses Leistenelement (25) Bereiche hat, in welchen es von der Blechhaut (11) beabstandet ist.

13. Gebäudehülle mit Paneel (15) nach Anspruch 11 oder 12, dadurch gekennzeichnet, dass das Leistenelement (25) an Hochsicken (19) einer Profilblechbahn (11) befestigt ist.

14. Profilblechdach (11) mit einem Steg (55) und Bördel (57) aufweisenden Stehfalz (53) und einem von der Blechhaut (11) lösbaren, Temperaturschwankungen ausgesetzten, flächigen Paneel (15),
dadurch gekennzeichnet,
- dass ein Halter (51) lediglich in Längsrichtung des Stehfalzes verschiebbar auf dem Stehfalz (53) sitzt und den Bördel (57) im Querschnitt umfasst, und
- dass das Paneel (15) am Halter (51) befestigt ist.

15. Gebäudehülle mit Paneel (15) nach einem der Ansprüche 11 bis 13, bzw. Profilblechdach nach Anspruch 14, dadurch gekennzeichnet, dass das Paneel (15) zwischen den Stehfälzen einer Stehfalzdachbahn (11) angeordnet ist.

16. Gebäudehülle mit Paneel (15) nach einem der Ansprüche 11 bis 15, dadurch gekennzeichnet, dass das Paneel (15) aus einem Fe-Blech (41) mit einer darauf angebrachten Dünnschicht-Fotovoltaïkfolie (39) besteht.

17. Gebäudehülle mit Paneel (15) nach Anspruch 16, dadurch gekennzeichnet, dass die Folie (39) an den Rändern in einem Blechfalz (45) festgehalten ist.

18. Gebäudehülle mit Paneel (15) nach Anspruch 16 oder 17, dadurch gekennzeichnet, dass die Folie (39) aufgeklebt ist.
